# EUROPEAN PATENT SPECIFICATION

(11) **EP 4 390 324 B1**
(45) Date of publication and mention of the grant of the patent: **17.06.2026**
(21) Application number: 22215690.3
(22) Date of filing: 21.12.2022
(51) Int. Cl.: G01D 5/26, G01D 5/353

(54) **SYSTEM AND METHOD FOR ADDRESSING OPTICAL FIBERS**
ADRESSIERUNGSVORRICHTUNG, MIT EINER ADRESSIERUNGSVORRICHTUNG ASSOZIIERTE OPTISCHE FASER SOWIE SYSTEM UND VERFAHREN ZUR ADRESSIERUNG VON OPTISCHEN FASERN
DISPOSITIF D'ADRESSAGE, FIBRE OPTIQUE ASSOCIÉE À UN DISPOSITIF D'ADRESSAGE, ET SYSTÈME ET PROCÉDÉ D'ADRESSAGE DE FIBRES OPTIQUES

(43) Date of publication of application: 26.06.2024
(73) Proprietor: EOSS SA, 1110 Morges (CH)
(72) Inventor: ROCHAT, Etienne, 1110 Morges (CH)
(74) Representative: IPAZ

(56) References cited:
- US-A1- 2013 051 791
- US-A1- 2014 340 235
- US-A1- 2021 359 755

## Description

### Technical field

The invention relates to a system and method for addressing optical fibers.

### State of the Art

One issue in an optical system having optical fibers distributed in different locations is the distance calibration or the localization of the different optical fibers. This is usually performed on the basis of the asset as built, by identifying specific points (manhole, splices if visible, connectors, offshore joint etc). Points can be manually identified, for instance by tapping the asset (in Distributed Acoustic Sensing (DAS)) or by using cold spray (Distributed Temperature Sensing (DTS)) etc.

Considering a data center with a fiber optic cable (FOC) per cabinet basis, and assuming 100s of cabinet, using the as built-in data or doing manual localization becomes difficult, or at least time consuming and thus not economically viable. For instance, for temperature, one would have to make a cold spot (with a spray) at the beginning and the end of every single sensing cable whilst someone analyses the temperature measurement data to identify the position.

US2013/051791 discloses a fault detection method and device for optical distribution network, and an optical network system.

US2014/340235 discloses a time division multiplexing (tdm) and wavelength division multiplexing (wdm) fast-sweep interrogator.

US2021/359755 discloses a process and device for measurement of physical quantity based on Rayleigh backscattering.

The goal of the invention is to present a system or method for addressing optical fibers, preferably compatible with uses of backscattered signals from these fibers, and which are easier and/or faster and/or more practical to use compared to the state of the art.

### Summary of the Invention

An aspect of the invention concerns a system according to claim 1.

In this system according to the invention, each addressing device can have each one of the following feature.

Each address signal of each digit can be a signal equal to or proportional to or depending on:
- a wavelength or frequency or wavenumber of a backscattered signal, such as a Brillouin or Raman or Rayleigh backscattered signal, or
- a wavelength or frequency or wavenumber of a back reflection signal, or
- an intensity loss of a backscattered signal, such as a Brillouin or Raman or Rayleigh backscattered signal.

Each address signal can be a Brillouin backscattered signal.

The value of each optical address digit can depend on:
- a Brillouin frequency shift and/or
- a material and/or structure and/or
- a physical parameter
of a section of optical fiber, among several sections of optical fibers in the addressing device, coding for this optical address digit.

The addressing device can comprise different sections of optical fibers optically linked in series and having respectively:
- different Brillouin frequency shifts and/or
- different materials and/or different structures and/or
- different physical parameters each maintained at a given value.

The addressing device can comprise different sections of optical fibers linked in series wherein to each section is applied a different strain. In this embodiment:
- the different sections of optical fibers can be part of a continuous optical fiber, and/or
- each section can comprise a length of optical fiber glued with a given elongation around an object.

The value of each optical address digit can depend on a presence or absence of a specific type of Fiber Bragg Grating inside the addressing device and/or on a presence or absence of a Fiber Bragg Grating at a specific location inside the addressing device among several specific locations in the addressing device.

The addressing device can comprise several Fiber Bragg Gratings optically linked in series.

Each optical address digit:
- can be a bit having only two possible values, or
- can have at least three possible values.

Each addressable optical fiber can be surrounded, along the optical path:
- by its associated addressing device on one end of the addressable optical fiber, and
- by a stop device on the other end of the addressable optical fiber, the stop device being arranged for coding for an end of the addressable optical fiber with a least one end digit created by an end signal coming from the stop device.

An other aspect of the invention concerns a method according to claim 11.

The fiber backscattered signal from at least one of the addressable optical fibers and each address signal can be generated from the same excitation signal or pump signal.

Each address signal of each digit can be a signal equal to or proportional to or depending on:
- a wavelength or frequency or wavenumber of a backscattered signal, such as a Brillouin or Raman or Rayleigh backscattered signal, or
- a wavelength or frequency or wavenumber of a back reflection signal, or
- an intensity loss of a backscattered signal, such as a Brillouin or Raman or Rayleigh backscattered signal.

Each address signal can be a Brillouin backscattered signal.

The value of each optical address digit can depend on:
- a Brillouin frequency shift and/or
- a material and/or structure and/or
- a physical parameter
of a section of optical fiber, among several sections of optical fibers in the addressing device, coding for this optical address digit.

Each addressing device can comprise different sections of optical fibers optically linked in series and having respectively:
- different Brillouin frequency shifts and/or
- different materials and/or different structures and/or
- different physical parameters each maintained at a given value.

Each addressing device can comprise different sections of optical fibers linked in series wherein to each section is applied a different strain. In this embodiment, for each addressing device:
- the different sections of optical fibers can be part of a continuous optical fiber, and/or
- each section can comprise a length of optical fiber glued with a given elongation around an object.

The value of each optical address digit can depend on a presence or absence of a specific type of Fiber Bragg Grating inside the addressing device and/or on a presence or absence of a Fiber Bragg Grating at a specific location inside the addressing device among several specific locations in the addressing device.

Each addressing device can comprise several Fiber Bragg Gratings optically linked in series along the optical path.

Each optical address digit:
- can be a bit having only two possible values, or
- can have at least three possible values.

Each addressable optical fiber can be surrounded, along the optical path:
- by its associated addressing device on one end of this addressable optical fiber, and
- by a stop device on the other end of this addressable optical fiber, the stop device being arranged for coding for an end of the addressable optical fiber with a least one end digit created by an end signal coming from the stop device.

### Detailed description of the figures and of realization modes of the invention

Other advantages and characteristics of the invention will appear upon examination of the detailed description of embodiments which are in no way limitative, and of the appended drawings in which:
- Figure 1 illustrates a first embodiment of a system 20 according to the invention (which is a best realization mode), comprising several addressing devices 1, each addressing device 1 being associated with an addressable optical fiber 15; system 20 is not necessary a closed loop: fiber 23 is optional and can be deleted if no probe signal is needed in system 20;
- Figure 2 illustrates a first example of two optically coded addresses 30, each address 30 comprising a plurality of optical address digits 31, 32, 33, 34,
- Figure 3 illustrates a second example of optically coded address 30 comprising a plurality of optical address digits 31, 32, 33, 34,
- Figures 4a and 4b illustrates a third example of optically coded address 30 comprising a plurality of optical address digits 31, 32, 33, 34,
- Figure 5 illustrates a second embodiment of a system 20 according to the invention, comprising several addressing devices 1, each addressing device 1 being associated with an addressable optical fiber 15,
- Figure 6 illustrates real data for the first example of two optically coded addresses, each address comprising four optical address digits,
- Figure 7 illustrates real data for the first example of two optically coded addresses, each address comprising four optical address digits, and
- Figure 8 illustrates three sections 11, 12, 13 of a fiber 71 in the case for which each address signal is a Brillouin backscattered signal and the value of each optical address digit respectively 31, 32, 33 depends on a physical parameter such like strain.

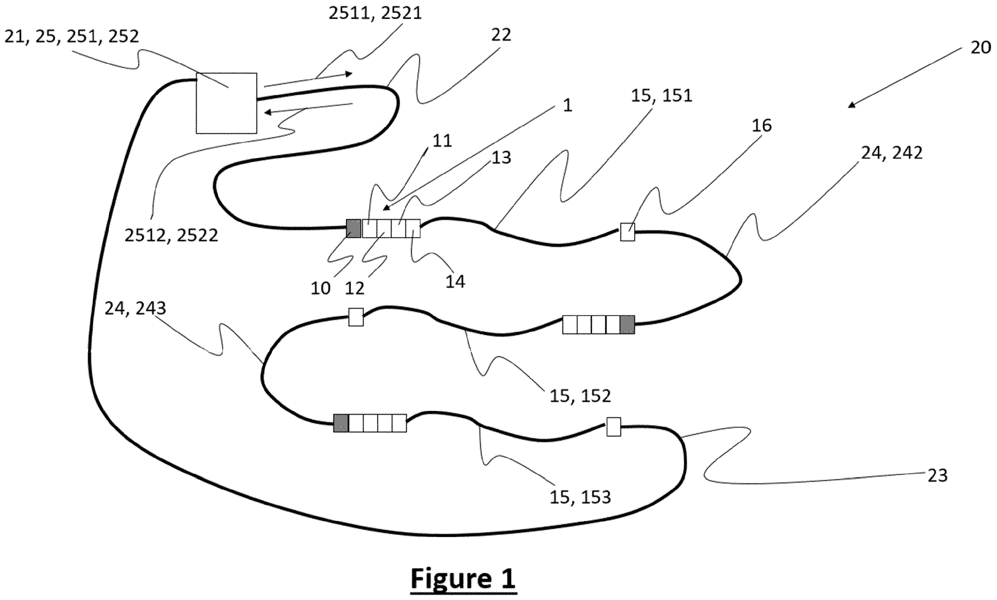

We are now going to describe, in reference to figures 1 to 3, 4a, 4b, 6, 7 and 8 a first embodiment of a system 20 according to the invention (which is a best realization mode), comprising several addressing devices 1, each addressing device 1 being associated with an addressable optical fiber 15.

The system 20 for addressing optical fibers 15 comprises a plurality of addressable optical fibers 15 arranged for light to travel through them along an optical path; in figure 1, we see a first addressable optical fiber 151, a second addressable optical fiber 152 and a third addressable optical fiber 153 optically linked in series along the optical path.

The system 20 for addressing optical fibers comprises an addressing device 1 per addressable optical fiber 15.

Each addressable optical fiber 15 is surrounded:
- by its associated addressing device 1 on one end of this addressable optical fiber 15, and
- by an associated stop device 16 on the other end of this addressable optical fiber 15, the stop device 16 being arranged for coding for an end of the addressable optical fiber 15 with a least one end digit 36 created by an end signal coming from at least a part of the stop device 16.

The addressing device 1 can be marketed:
- alone, and/or
- with its associated addressable optical fiber 15, and/or
- with its associated end device 16, and/or
- with its associated addressable optical fiber 15 and end device 16.

For each fiber 15, the associated addressing device 1 and/or the associated end device 16 can be attached to this fiber 15 by connection means allowing them to be connected and disconnected from this optical fiber 15 (for example for changing an address) by use of any known fiber connector, or it can be attached and secured in a non-removable manner to this optical fiber 15 (for example through a fiber splicing).

Each addressing device 1 associated with an addressable optical fiber 15 is arranged to give an optically coded address 30 to the addressable optical fiber 15 with which it is associated different from the address(es) 30 of the other addressable optical fiber(s) 15.

Each associated addressing device 1 and addressable optical fiber 15 (and stop device 16) form a part of the optical path distinct from the other parts of the optical path formed by the other associated addressing device 1 and addressable optical fiber 15 (and stop device 16).

Each associated addressing device 1 and addressable optical fiber 15 can be directly optically connected without any intermediate parts.

Each associated addressing device 1 and stop device 16 can be directly optically connected without any intermediates.

In some embodiments, each addressing device 1 is closer, along the optical path, to the addressable optical fiber 15 with which it is associated than to the other addressable optical fibers 15.

Each optically coded address 30 comprises a plurality of optical address digits 31, 32, 33, 34, each addressing device 1 being arranged so that each of the optical address digits 31, 32, 33, or 34 of the address given by this addressing device 1 is created by an address signal coming from this addressing device 1, more precisely from a part of the addressing device 1 corresponding to this optical address digit 31, 32, 33 or 34.

In some embodiments, system 20 uses backscattered signals 2512 from the optical fibers 15. In some embodiments, system 20 is arranged for measuring at least one strain and/or temperature in the optical fibers 15 by use of these backscattered signals 2512.

System 20 comprises an emitting device 25 comprising:
- emitting device 251 for emitting at least one excitation signal 2511 (also called fiber excitation signal 2511), the fiber excitation signal 2511 generating the fiber backscattered signal 2512 used (by analysis device 21) for measuring a parameter (strain, temperature, vibration, etc.) into at least one of the optical fibers 15, and
- emitting device 252 for emitting at least one excitation signal 2521 (also called addressing excitation signal 2521) used for generating the address signal 2522 of each digit 31, 32, 33 or 34.

The fiber excitation signal 2511 and the addressing excitation signal 2521 can be the same signal, or can be different signals.

The fiber backscattered signal 2512 and the address signal 2522 can be the same signal, or can be different signals.

Emitting devices 251 and 252 can be the same device or different devices.

In some embodiments, emitting device 251 can comprise:
- an emitting device (e.g. a laser) arranged for emitting a pump signal (e.g. a pulsed pump signal) in the optical path, preferably arranged for injecting this pump signal in a first end (corresponding to optical fiber 22, which is also part of the optical path) of the optical path; thus pump signal is thus one fiber excitation signal 2511 and is arranged for generating the fiber backscattered signal 2512 in the fibers 15, and
- if necessary (in case of BOTDA or BOFDA, or BOCDA), an emitting device (e.g. a laser) arranged for emitting a probe signal (e.g. a continuous probe signal) in the optical path, preferably arranged for injecting this probe signal in a second end (corresponding to optical fiber 23, which is also part of the optical path) of the optical path; this probe signal is thus another fiber excitation signal 2511.

In some embodiments, emitting device 252 can comprise:
- an emitting device (e.g. a laser) arranged for emitting a pump signal (e.g. a pulsed pump signal) in the optical path, preferably arranged for injecting this pump signal in a first end (corresponding to optical fiber 22, which is also part of the optical path) of the optical path; thus pump signal is thus one addressing excitation signal 2521 and is arranged for generating the address signal 2522 of each digit 31, 32, 33 or 34, and
- if necessary (in case of BOTDA or BOFDA, or BOCDA), an emitting device (e.g. a laser) arranged for emitting a probe signal (e.g. a continuous probe signal) in the optical path, preferably arranged for injecting this probe signal in a second end (corresponding to optical fiber 23, which is also part of the optical path) of the optical path; this probe signal is thus another addressing excitation signal 2521.

The sets (formed individually by associated addressing device 1, fiber 15 and stop device 16) are optically linked together two by two by an optical fiber link 24, which is also part of the optical path.

System 20 comprises an analysis device 21 arranged to:
∘ receive at least one fiber backscattered signal 2512 from at least one of the addressable optical fibers 15, and
∘ for each addressable optical fiber 15 from which a fiber backscattered signal is received, identify and/or localize this addressable optical fiber 15 by using the address signals 2522 of the optical address digits 31, 32, 33, 34 coding for the address 30 of this addressable optical fiber 15.

Typically, analysis device 21 comprise at least one optical detector, and at least one among one computer, one central processing or computing unit, one analogue electronic circuit (preferably dedicated), one digital electronic circuit (preferably dedicated) and/or one microprocessor (preferably dedicated) and/or software means.

System 20 comprises thus at least one interrogator 21, 25 comprising the emitting device 25 and the analysis device 21.

Emitting device 251 combined with analysis device 21 typically comprise a Distributed Fiber Optic Sensor, an Optical Time Domain Reflectometer (OTDR), optical frequency domain reflectometer (OFDR), a Distributed Acoustic Sensing (DAS) sensor, a Distributed Temperature Sensing (DTS) sensor, a Distributed Strain Sensing (DSS) sensor, a Brillouin Optical Time Domain Analyzer (BOTDA), a Brillouin Optical Frequency Domain Analyzer (BOFDA), a Brillouin Optical Time Domain Reflectometer (BOTDR), and/or a Brillouin Optical Frequency Domain Reflectometer (BOFDR), a Brillouin optical correlation domain reflectometer (BOCDR), and/or a Brillouin optical correlation domain analyzer (BOCDA).

Emitting device 252 combined with analysis device 21 typically comprise a Distributed Fiber Optic Sensor, an Optical Time Domain Reflectometer (OTDR), optical frequency domain reflectometer (OFDR), a Distributed Acoustic Sensing (DAS) sensor, a Distributed Temperature Sensing (DTS) sensor, a Distributed Strain Sensing (DSS) sensor, a Brillouin Optical Time Domain Analyzer (BOTDA), a Brillouin Optical Frequency Domain Analyzer (BOFDA), a Brillouin Optical Time Domain Reflectometer (BOTDR), and/or a Brillouin Optical Frequency Domain Reflectometer (BOFDR), a Brillouin optical correlation domain reflectometer (BOCDR), a Brillouin optical correlation domain analyzer (BOCDA), and/or a fiber Bragg Grating interrogator.

Each addressing device 1 is thus arranged for being associated with an addressable optical fiber 15 and is thus arranged to give an optically coded address 30 to the addressable optical fiber 15 with which it is arranged to be associated or with which it is associated.

Each optically coded address 30 comprises a plurality of optical address digits 31, 32, 33, 34, each addressing device 1 being arranged so that each of the optical address digits 31, 32, 33 or 34 of the address given by this addressing device 1 is created by an address signal coming from the addressing device 1, more precisely coming from a part of the addressing device 1 corresponding to this address optical digit 31, 32, 33 or 34.

Each addressing device 1 comprises several optical sections optically linked in series along the optical path.

Each address signal of each digit 31, 32, 33 or 34 comes from a different optical section.

Each address signal 2522 of each digit 31, 32, 33 or 34 is a signal equal to or proportional to or depending on:
- a wavelength or frequency or wavenumber of a backscattered signal, such as a Brillouin or Raman or Rayleigh backscattered signal, generated from the excitation signal 2521 for example generated from the pump signal of generator 252, or
- a wavelength or frequency or wavenumber of a back reflection signal of an excitation signal 2521 for example of the pump signal of generator 252, or
- an intensity loss of a backscattered signal, such as a Brillouin or Raman or Rayleigh backscattered signal (preferably a Raman or Rayleigh backscattered signal), generated from the excitation signal 2521 for example generated from the pump signal of generator 252.

Each end signal of each end digit 36 coming from a stop device 16 can have the same nature than each address signal 2522, i.e. is respectively a signal equal to or proportional to or depending on:
- a wavelength or frequency or wavenumber of a backscattered signal, for example a Brillouin or Raman or Rayleigh backscattered signal, generated from the excitation signal 2521 for example generated from the pump signal of generator 252 or
- a wavelength or frequency or wavenumber of a back reflection of excitation signal 2521, for example of the pump signal of generator 252 or
- an intensity loss of a backscattered signal, such as a Brillouin or Raman or Rayleigh backscattered signal, generated from the excitation signal 2521 for example generated from the pump signal of generator 252.

As each fiber optic cable (FOC) 15 has a section of fiber at both ends (device 1 at one end and device 16 at the other end) that is easily measured directly by the interrogator comprising emission device 25 and analysis device 21 using directly the DTS/DSS/DAS or that can be read with an OTDR or a FBG interrogator and transferred to the DTS/DSS/DAS, it makes configuration easier.

Ideally, the START end of each fiber 15, i.e. its addressing device 1, has an address 30 made of several digits 31, 32, 33, 34, for example 4 digits providing at least 16 addresses (binary) or more (if the digits have multilevel). Similarly, the STOP end of each fiber 15, i.e. its stop device 16, has an address made of at least one digit 36, for example a single STOP digit can identify the end of the measurement section 15 and also provide a direction (that can be measured from the START end 1 to the STOP end 16).

The type of digit 31, 32, 33, 34, 36 is technology dependent.

Each optical address digit 31, 32, 33, 34 (and end 36):
- can be a bit having only two possible values, or
- can have at least three possible values.

The value of each optical address digit 31, 32, 33, 34 (and end 36) can be a number (0 or 1 for a bit, or more generally 1, 2, 3, 4, etc.) or not (for example "YES" or "NOT" for a bit; or "FIRST TYPE OF OPTICAL FIBER", "SECOND TYPE OF OPTICAL FIBER", "THIRD TYPE OF OPTICAL FIBER", "FOURTH TYPE OF OPTICAL FIBER", etc. ; or "FIRST TYPE OF FIBER BRAGG GRATING" , "SECOND TYPE OF FIBER BRAGG GRATING", "THIRD TYPE OF FIBER BRAGG GRATING", "FOURTH TYPE OF FIBER BRAGG GRATING", etc.).

System 20 allows:
- identifying uniquely one sensing fiber 15 within a daisy chain of fibers 15
- finding the sensing direction by providing a "START" and a "STOP" position
- reading each address 30 with an interrogator 21, 25, such as a DTS, DSS, or DAS interrogator 21, 25
- no need for in field localization of the start/end and direction of each sensing section
- Pre-calibration of sensing fiber 15 with known address, allowing then this sensing fiber to be deployed on an installation and then quickly identified and located with known calibration,
- automatic configuration based on START/STOP signal detection for automatic mapping of several sensing fiber 15 and their addresses,
- fast installation/configuration.

The embodiment of method for addressing optical fibers, implemented in system 20 of figure 1, comprises:
- for each addressing device 1 associated with an addressable optical fiber 15, generating an optically coded address 30 to the addressable optical fiber 15 with which it is associated different from the address(es) 30 of the other addressable optical fiber(s) 15, each address 30 comprising a plurality of optical address digits 31, 32, 33, 34, each optical address digit 31, 32, 33, 34 being created by an address signal coming from the addressing device 1,
- receiving at least one fiber backscattered signal from at least one of the addressable optical fibers 15, and
- for at least one or each addressable optical fiber 15 from which a fiber backscattered signal is received, identifying and/or localizing this addressable optical fiber 15 by using the address signals of the optical address digits 31, 32, 33, 34 coding for the address 30 of this addressable optical fiber 15.

In some embodiments, the fiber backscattered signal from at least one of the addressable optical fibers 15 and each address signal are generated from the same excitation signal or pump (and probe) signal from emitting device 25.

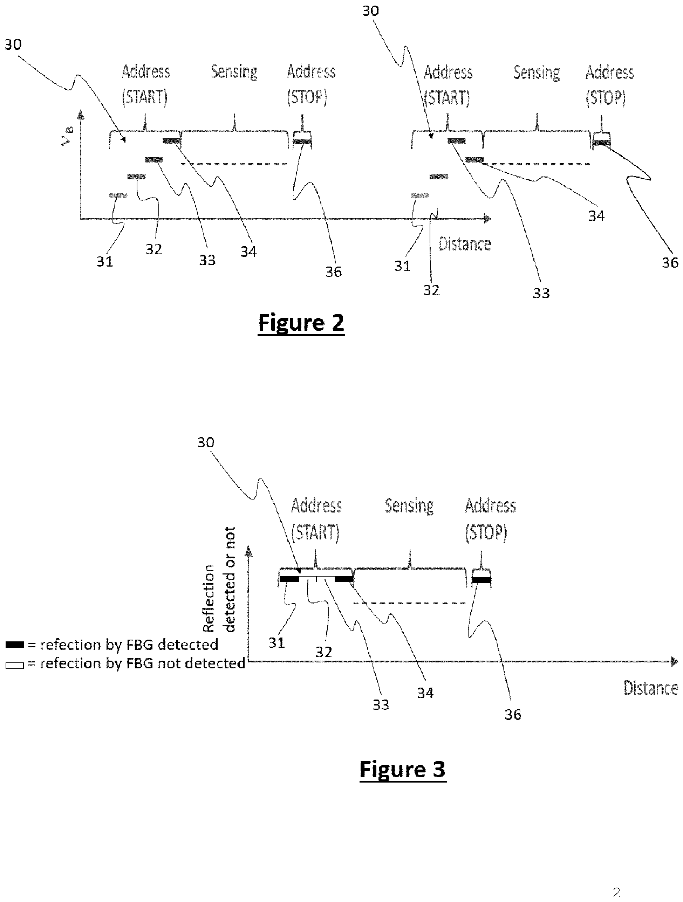

We are now going to describe with more details the first, second, and third examples of address 30. In figures 2, 3, 4a and 4b, we supposed that each addressing device 1 comprises as illustrated in figure 1 at least four optical sections (first optical section 11, then second optical section 12, then third optical section 13, the fourth optical section 14) optically linked in series along the optical path. For the second example of figure 3 , each addressing device 1 further comprises, before (along the optical path) sections 11, 12, 13, 14, an initial optical section 10 not coding for the address 30 but indicating that an address follows.

We are now going to describe with more details the first example of address 30.

The first example of address 30 is illustrated in figure 2.

In this first example:
- emitting devices 251 and 252 are a same and common emitting device 25
- The fiber excitation signal 2511 and the addressing excitation signal 2521 are the same signal, for example a laser signal
- the system 20 is a Brillouin system, typically a Brillouin DTS system 20:
- interrogator 21, 25 is typically a Brillouin DTS interrogator
- the fiber backscattered signal 2512 from fiber 151, 152 and/or 153 is a Brillouin backscattered signal, and
- the address signal 2522 for each digit of the address 30 from each addressing device 1 is a Brillouin backscattered signal
- Analysis device 21 is arranged for analyzing (or is analyzing) the fiber backscattered signal 2512 and each address signal 2522.

Brillouin is based on the measurement of the so-called Brillouin frequency shift. In silica glass, the Brillouin shift *v_{B}* is typically 10.8GHz at a wavelength of 1550nm. Pure silica fibers have a shift of 11GHz. Some fibers (DRAKA BB-XS), due to their manufacturing process have typically a shift of 10.6GHz. Thus, by carefully selecting different fibers, a multilevel digit address 30 can be built.

In the first example of address 30, each address signal is a Brillouin backscattered signal and the value of each optical address digit 31, 32, 33, 34 depends on:
- a Brillouin frequency shift and/or
- a material (for example with a specific optical index) and/or structure (for example with or without hollow part and/or tubular part and/or photonic crystals and/or microstructured clad) (the Brillouin frequency shift being given by the material and/or structure) and/or

- a physical parameter, for example at least one among:
   ∘ temperature, for example by applying different temperatures on the four sections 11, 12, 13, 14 of fiber by using four different ovens
   ∘ strain, for example by applying elongation (pulling) on the four sections 11, 12, 13, 14, with different pulling forces
   ∘ vibration, for example by coiling each section 11, 12, 13, 14 around a piezo-electric cylinder, each cylinder being excited at a different frequency,
of a section of optical fiber, among several sections respectively 11, 12, 13, 14 of optical fibers in the addressing device, coding for this optical address digit respectively 31, 32, 33, 34. In this case, each section 11, 12, 13, or 14 of optical fiber is one of the optical sections of the addressing device 1 optically linked in series along the optical path.

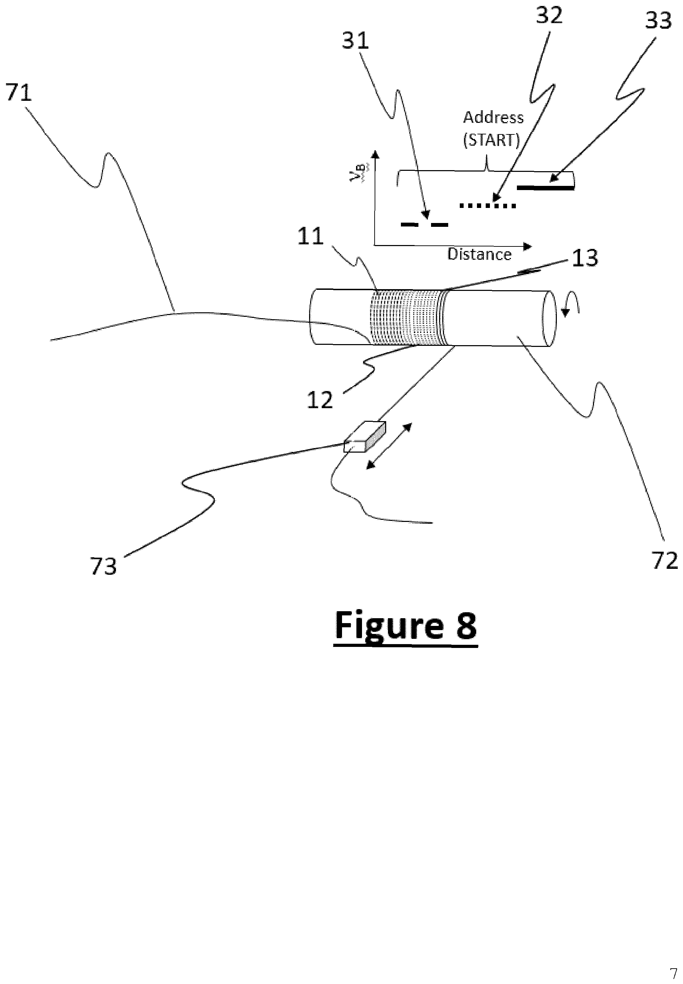

For example, figure 8 illustrates the case for which each address signal is a Brillouin backscattered signal and the value of each optical address digit respectively 31, 32, 33 (only three digits in the example of figure 8) depends on a physical parameter, such like strain, of a section respectively 11, 12, 13. Using a bend insensitive fiber 71 (for the three sections 11, 12, 13) that can be coiled around a small diameter 72 (typically a steel cylinder 72), typically 10mm or less, for example 5mm, the address can be defined by coiling and gluing fiber 71 around a cylinder 72 whilst applying controlled tension. Starting with a define Brillouin frequency, for instance 10.8GHz at 1550nm for most single-mode fiber, a first length 11 (typically of 1m) of fiber 71 is coiled around the cylinder 72 with a given elongation (controlled by a tension mechanism 73 such like a spring) and secure with glue. Then tension is modified (increased in figure 8) and another length 12 (typically of 1m) of fiber 71 is coiled. Finally, tension is changed (increased in figure 8) one more time and a third section 13 (typically of 1m) of fiber 71 is glued (shown in figure 8 with the tension on the coiled and not yet coiled section). This results in a 3 digits - 3 level address system with no splice, no additional loss, small form factor. In other embodiments two or more digits and/or two or more levels can be employed. Since the fiber 71 is continuous, there is no additional splice loss between the digits 31, 32, 33 as in the other example based on material or structure difference(s). In addition, by using a bend insensitive fiber, bending loss are kept low too. Less loss means also that more systems can be measured using the same interrogator. Thus, in this case, each section 11, 12, 13 comprises a length (or a same length, for example 1 m each) of optical fiber glued with a given elongation (preferably around an object, preferably such like a cylinder); all these sections 11, 12, 13 are preferably lengths of a same optical fiber 71. In case of figure 8, the addressing device 1 comprises different sections 11, 12, 13 of optical fibers linked in series wherein to each section 11, 12, 13 is applied a different strain. The different sections 11, 12, 13 of optical fibers are part of a continuous optical fiber 71. Each section 11, 12, or 13 comprises a length of optical fiber glued or immobilized or fixed with a given elongation or strain (for example around an object 72).

In the first example of address 30, each end signal is a Brillouin backscattered signal and the value of each end digit 36 depends on:
- a Brillouin frequency shift and/or
- a material and/or structure, and/or
- and/or physical parameter (each section 11, 12, 13, 14 being equipped with a device arranged for maintaining constant this physical parameter of the section, such like a thermostat or a pressure controller, an oven, pulling means, piezo-electric cylinder, etc. as previously described)
of a section of optical fiber in the stop device 16, coding for this end digit 36.

The address 30 is coded this way: the value of the n^{th} digit of the address 30 is i, i being an integer corresponding to a specific type of section of optical fiber having a specific value of Brillouin frequency shift *v_{B}* detected at the n^{th} optical section 11, 12, 13, or 14 by analysis device 21.

The digit spatial length should be compatible with the spatial resolution of the interrogator 21, 25. For instance, should the system 20 work with 2 meters spatial resolution (SR), then the digit length should be slightly longer than 2m (technically, should be the SR + sampling length, typically 2.5m in this case) to make sure that the address digit 31, 32, 33 or 34 is read.

Figure 2 is an example:
- assuming 4 different Brillouin shifts for each digit respectively 31, 32, 33, 34 corresponding to each optical section respectively 11, 12, 13, 14 of the addressing device 1, and
- assuming a pure silica fiber as stop digit 36 corresponding to the stop device 6.

For example, in the left part of figure 2, the address of fiber 151 comprises four digits and is "1" "2" "3" "4" (but it could also be "FIRST TYPE OF OPTICAL FIBER" "SECOND TYPE OF OPTICAL FIBER" "THIRD TYPE OF OPTICAL FIBER" "FOURTH TYPE OF OPTICAL FIBER") and in the right part of figure 2 the address of fiber 152 comprises four digits and is "1" "2" "4" "3".

In the first example of address 30, each or at least one of the addressing devices 1 comprises different sections 11, 12, 13, 14 of optical fibers optically linked in series along the optical path and preferably (but not necessarily, as the address "1" "1" "1" "1" is a possible address) having different Brillouin frequency shifts and/or different materials and/or structures.

The lead in fiber (22 for fiber 151, 242 for fiber 152, and 243 for fiber 153) can have any shift (including those of the address digits 31, 32, 33, 34 corresponding to each optical section respectively 11, 12, 13, 14) and the sensing fiber 15 as well. Practically, addressing digit 31 must have a different shift from lead in fiber so that it can be read. Thus, if lead in fiber 22 corresponds to digit 31=1, then the address of type 1xxx are forbidden. Other design rules are possible too; for instance, digit 32=2 in all conditions. In this case, as the length of the digit and the total number of digits are known, the address can be read.

The first digit 31 of addressing device 1 of fiber respectively 151, 152, 153 should be different from the signal generated in the previous (along the optical path) fiber respectively 22, 242, 243.

The STOP digit 36 of stop device 16 of fiber respectively 151, 152, 153 should be different from fiber the signal generated by following (along the optical path) fiber respectively 242, 243, 23.

This scheme provides as many as 4⁴= 256 addresses, but the START address 0001 is forbidden as is the same as the STOP one (loosing direction).

Similarly, the address 0000 is forbidden, as the START cannot be found.

Thus, 254 addresses and fibers 15 can be distinguished.

In the first example of address 30 each addressing device 1 comprises different sections 11, 12, 13, 14 of optical fibers optically linked in series along the optical path and these sections 11, 12, 13, 14 includes at least two sections of optical fibers having:
- at least two different Brillouin frequency shifts and/or
- at least two different materials and/or structures
that also differ from all the Brillouin frequency shift(s) and/or material(s) and/or structure(s) of fiber 15 with which this addressing device 1 is associated with.

In the first example of address 30 each stop device 1 comprises at least one section of optical fiber having:
- a Brillouin frequency shifts and/or
- a material and/or structure
that differs from all the Brillouin frequency shift(s) and/or material(s) and/or structure(s) of fiber 15 with which this addressing device 1 is associated with.

In practice (at a wavelength of 1550nm for the excitation pump signal), pure silica fibers have a ~11GHz Brillouin frequency; most single mode fibers (SMF) have a ~10.8GHz and a few bend-insensitive fibers have a ~10.6GHz frequency. This provides a 3-level address system. Intermediate frequencies are available, thanks to the different manufacturing process and to the intrinsic dispersion in the manufacturing so that, in practice, at least or even more than 6 levels could be made available.

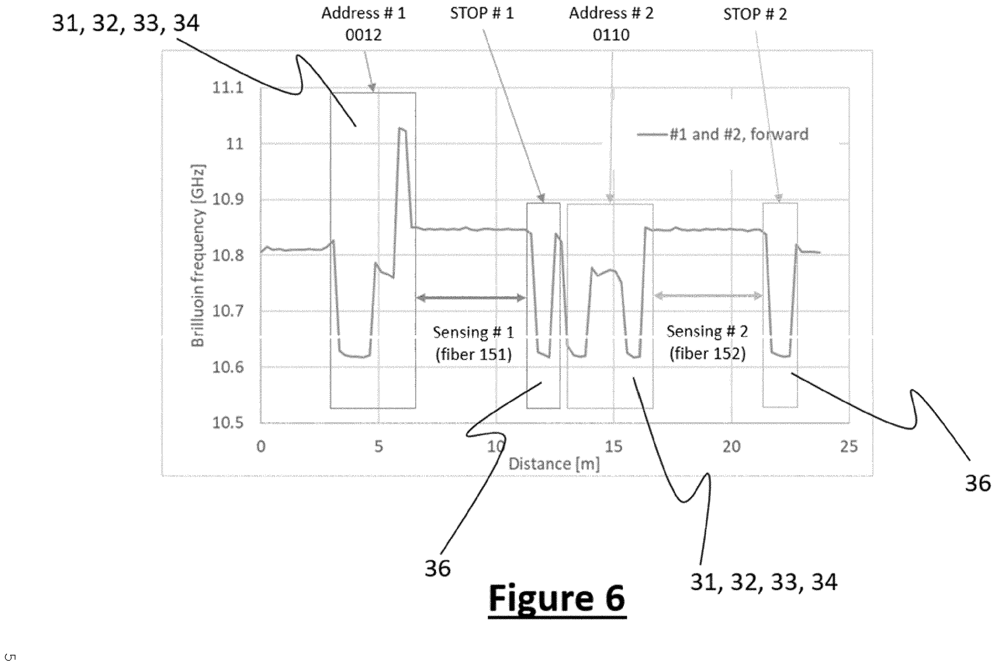

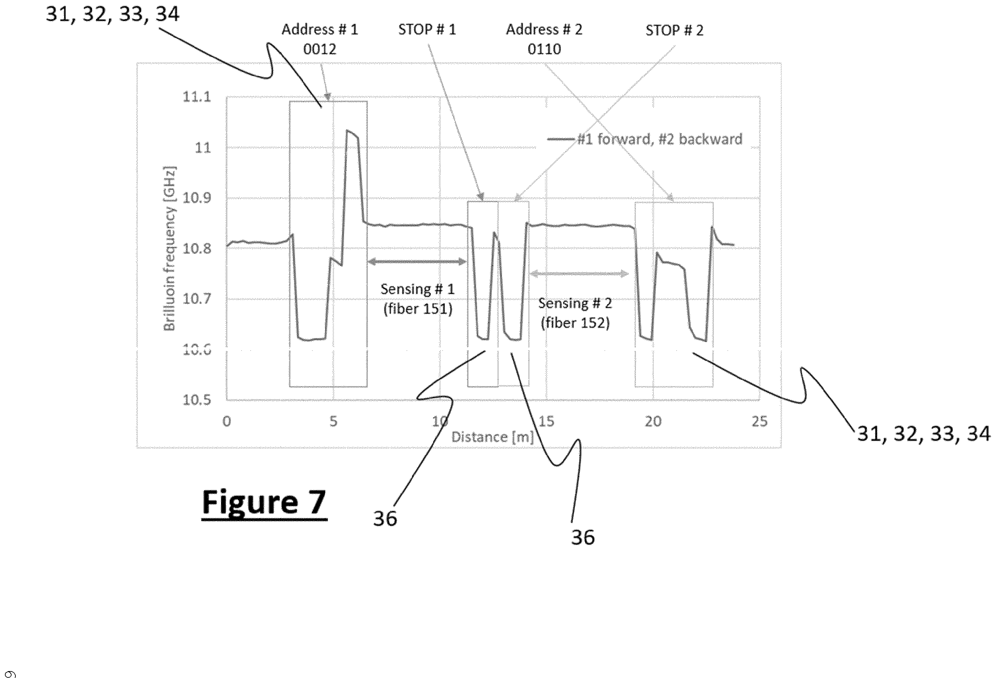

Figures 6 and 7 illustrate real data for the first example of two optically coded addresses of the two previously described fibers 151, 152, each address comprising four optical address digits.

In figures 6 and 7:
- digit "0" corresponds to a Brillouin frequency of 10.65GHz,
- digit "1" corresponds to a Brillouin frequency of 10.75GHz,
- digit "2" corresponds to a Brillouin frequency of 11.02GHz,
- the address of fiber 151 is "0012",
- the address of fiber 152 is "0110",
- in figure 7, the direction of fiber 152 has been reversed compared to figure 6, showing that the orientation of fiber 152 can be found.

Even the previously described first example of address 30 concerns the case where the fiber backscattered signal 2512 and the address signal 2522 are a same Brillouin backscattered signal , the case of the previously described first example of address 30 (for which the value of each optical address digit depends on a material and/or structure and/or parameter of a section of optical fiber, among several sections of optical fibers in the addressing device, coding for this optical address digit) can be generalized:
- fiber backscattered signal 2512 can be a Brillouin backscattered signal, a Raman Backscattered signal, or a Rayleigh Backscattered signal, for various possibilities a measured parameters (temperature, strain, vibration, etc.) of fiber(s) 15, and/or
- address signal 2522 can be a signal equal to or proportional to or depending on, by order of preference:
   ∘ a wavelength or frequency or wavenumber of a Brillouin backscattered signal, because Brillouin frequency is the most sensitive to fiber type,
   ∘ a wavelength or frequency or wavenumber of Raman or Rayleigh backscattered signal, because some specific sections of optical fibers could have some specific Raman or Rayleigh signatures,
   ∘ an intensity loss of a backscattered signal, such as a Brillouin or Raman or Rayleigh backscattered signal, but such an intensity loss is usually difficult to detect and usually drowned in measurement noise,
- fiber backscattered signal 2512 and the address signal 2522 can be different or the same signal; in the preferred embodiment, fiber backscattered signal 2512 and the address signal 2522 are the same signal because this has the technical advantage of greater simplicity.

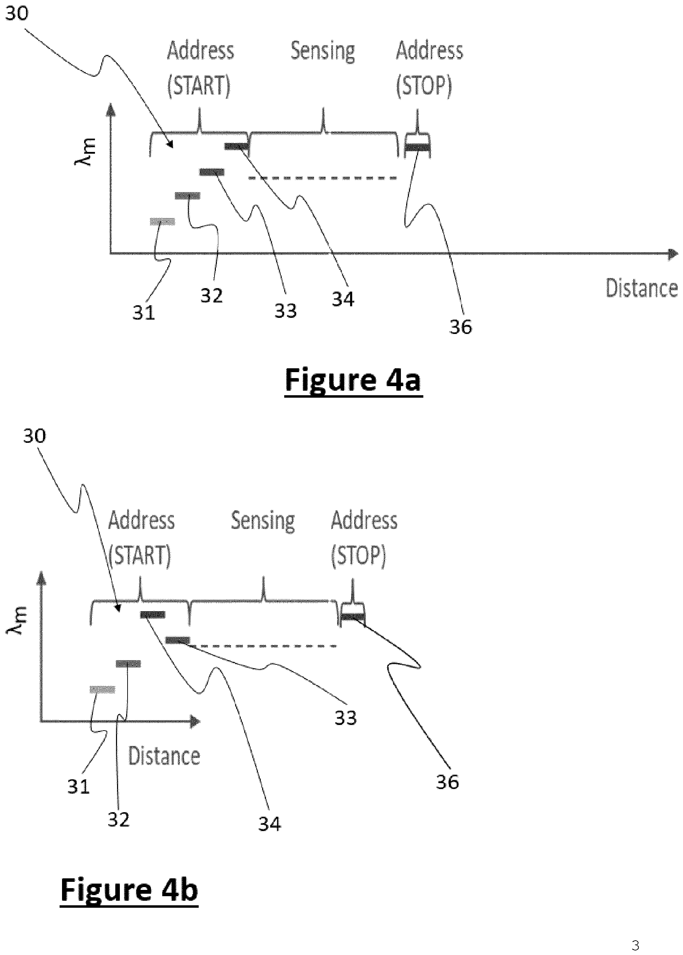

Also, in other examples, the value of each optical address digit 31, 32, 33 or 34 depends:
- in a second example of address 30 (illustrated in figure 3), on a presence or absence of a Fiber Bragg Grating at a specific location inside the addressing device 1 among several specific locations 11, 12, 13, 14 in the addressing device 1; in this case, each specific location inside the addressing device 1 is one of the optical sections 11, 12, 13, 14 of the addressing device 1 optically linked in series along the optical path, and/or
- in a third example of address 30 (illustrated in figures 4a and 4b), on a presence or absence of a specific type of Fiber Bragg Grating inside the addressing device 1. Each Fiber Bragg Grating can be in one of the optical sections 11, 12, 13, 14 of the addressing device 1 optically linked in series along the optical path.

In the second or third example of address 30, each addressing device 1 can comprise several Fiber Bragg Gratings optically linked in series along the optical path. For example:
- in the second example of address 30, the several fiber Bragg Gratings all have a maximum reflection coefficient for the same wavelength λₘ,
- in the third example of address 30, the several fiber Bragg Gratings are different and thus have their maximum reflection coefficient for different wavelengths λₘ (i.e. the value of λₘ can differ (or necessary differs) from one FBG to another FBG of the same addressing device 1)

In the second and third example of address 30, each Fiber Bragg Grating used for coding the address 30 is a low reflectivity Fiber Bragg Grating (FBG), having maximum reflection coefficient for λₘ, this maximum reflection coefficient being for example 5% reflectivity or less, e.g. 2% reflectivity or less, e.g. 1% reflectivity or less, e.g. 0.5% reflectivity or less.

In the second and third example of address 30, the or each end digit 36 is created by the presence of a Fiber Bragg Grating inside the stop device 16.

We are now going to describe with more details the second example of address 30.

The second example of address 30 is illustrated in figure 3.

Thus, in this second example:
- emitting devices 251 and 252 are the same device or distinct devices,
- The fiber excitation signal 2511 and the addressing excitation signal 2521 are the same laser signal or two different laser signals
- the system 20 comprises:
   - emitting device 251 and analysis device 21 which form together a Raman system, for example Raman DTS system, and
   - emitting device 252 and analysis device 21 which form together a FBG interrogator
- the fiber backscattered signal 2512 from fiber 151, 152 and/or 153 is a Raman backscattered signal, and
- the address signal 2522 for each digit of the address 30 from the addressing device 1 is a back reflection signal, i.e. the back reflection of the excitation pump signal 2521 by one FBG
- Analysis device 21 is arranged for analyzing (or is analyzing) the fiber backscattered signal 2512 and each address signal 2522.

Raman is not sensitive to frequency but to intensity only. In theory, it is also possible to build digits 31, 32, 33, 34 by using calibrated loss that can be measured with the Raman system 20. However, making reliable and controllable splice loss is possible but not a preferred embodiment. In addition, adding too much loss will impact the total number of fibers 15 that can be measured with a single interrogator 21, 25.

Within a Raman system 20, the backscattering is shifted by 140THz with respect to the pump laser 251 and/or 252. For 1550nm based system 20, this corresponds to 1450nm and 1650nm for the Anti-stokes and the Stokes wavelength. The interrogator 21, 25 is arranged (and modified compared to the state of the art) to get access to the specific wavelength of the Rayleigh backscattering of the pump (for the third example described below) and/or the pump reflection (for the present second example) in addition to the other two Anti-stokes and Stokes Raman wavelengths.

In this second example:
- low reflectivity Fiber Bragg Grating (FBG, 0.5% reflectivity or less) are used as digits 31, 32, 33, 34, provided that they all have the same wavelength λₘ (for which this Fiber Bragg Grating has a maximum reflection coefficient) matching the wavelength of the excitation pump signal from emitting device 25.

In each addressing device 1:
- a first Fiber Bragg Grating (FBG) is used in optical section 10 (illustrated in figure 1, this section 10 is not existing in the first example previously described) of addressing device 1. This first FBG is not coding for the address 30, but is just indicating the beginning of the address 30, i.e. that an address 30 will follow; nevertheless, this first FBG is optional, because it is easier to have this first FBG as the first address digit. Else, a FBG is wasted for coding an address,
- then, after (along the optical path) this first FBG, N (for example N=4) Fiber Bragg Gratings (FBG) follow (for each FBG: if present, back reflection, bit=1, if absent, bit=0), each one of these FBG corresponding to one of the optical section respectively 11, 12, 13, 14 of addressing device 1 and thus to one of the digits respectively 31, 32, 33 or 34 of the address 30 ; if N=4, this provides 16 addresses.

Each stop device 16 comprises one single FBG as STOP digit 36.

Additional FBGs can be used in each addressing device 1 to provide more addresses.

The FBGs being all at the same wavelength λₘ, they are spaced by a fiber length which is slightly longer than the spatial resolution of interrogator 21, 25.

There is still a tradeoff with the induced losses, given the fact that the optical budget of a Raman system is limited.

The address 30 is thus coded this way: the value of the n^{th} digit of the address 30 is:
- "1" or "YES" if a reflection by a Fiber Bragg Grating is detected at the n^{th} optical section 11, 12, 13, or 14 by analysis device 21, or
- "0" or "NO" if no reflection by a Fiber Bragg Grating is detected at the n^{th} optical section 11, 12, 13, or 14 by analysis device 21.

For example, in figure 3, the address 30 comprises four digits and is "1" "0" "0" "1" (or "YES" "NO" "NO" "YES").

We are now going to describe with more details the third example of address 30.

This example will be described only for its differences compared to the second example.

The Rayleigh DAS is normally working at a fixed wavelength, like the Raman DTS. It could therefore be used to read an FBG address too. The Rayleigh DAS laser wavelength can be easily tuned (scanned) so that FBGs with slightly different wavelengths λₘ could be used

The third example of address 30 is illustrated in figures 4a and 4b.

In this third example:
- emitting devices 251 and 252 are the same device or distinct devices,
- The fiber excitation signal 2511 and the addressing excitation signal 2521 are the same laser signal or two different laser signals
- the system 20 comprises:
   - emitting devices 251 and analysis device 21 which form together a Raman system, for example Raman DTS system, and
   - emitting device 252 and analysis device 21 which form together a Rayleigh OTDR interrogator
- the fiber backscattered signal 2512 from fiber 151, 152 and/or 153 is a Raman backscattered signal (using DTS), and
- the address signal 2522 for each digit of the address 30 from the addressing device 1 is a Rayleigh backscattered signal backscattered by a FBG,
- Analysis device 21 is arranged for analyzing (or is analyzing) the fiber backscattered signal 2512 and each address signal 2522.

In this third example, one could use an independent OTDR /FBG interrogator 21, 25 to measure the addresses and the position of fibers 15 and then transfer the information to the Raman DTS (manually/automatically) 21, 25 (same reference numbers in figure 1) in order to build the distance scale.

This requires that the exact laser wavelength of the OTDR and of the Raman are known, or better, are identical, to ensure that the distance scaling is the same for both interrogators.

Using a simple OTDR (no laser wavelength scan), all the FBGs must be at the same wavelength λₘ. This is the binary code described for the second example of code 30. However, FBGs are not designed normally to have all at the same wavelength λₘ. In sensing, they are spread over the optical spectrum, in exactly the same way as it is done for the Brillouin first example. Thus, in the third example, N (N being an integer) FBGs for coding an address 30 will work as N different shifts *v_{B}* of the first example of address 30.

Thus, in the third example of address 30, the FBG based address 30 can be read with an FBG interrogator 21, 25, namely a tunable laser or a white light source. Here again, matching the laser wavelength or having access to the exact laser wavelength between the OTDR and the DTS/DSS/DAS is important in order to match the distance scale.

There is no need for a given length between the FBGs (a normal FBG interrogator 21, 25 does not distinguish distance and works with continuous wave signal). Thus, FBGs, can be understood as being spatially superimposed. From this point of view, the two addresses 30 in figures 4a and 4b are thus identical

In this third example, with 4 FBGs there are only 4 digits available for a total of 16 addresses. To distinguish START digits from STOP digits, a START address made of a single digit cannot have the same FBG than the STOP address. In other words, the START address 0001 is forbidden as the final is the same as the START one (loosing direction).

Similarly, the address 0000 is forbidden, as the START cannot be found.

Thus, 14 addresses and fibers 15 can be distinguished.

This approach is effective for spaces, as one could think of writing the FBGs close to each other. This would limit the length and the space required to protect the address.

Thus, the address 30 is coded this way: the value of the n^{th} digit of the address 30 is:
- "1" or "YES" if a reflection by a Fiber Bragg Grating of the n^{th} type (each type of Fiber Bragg Grating being defined by a specific value of wavelength λₘ for which this Fiber Bragg Grating has a maximum reflection coefficient) at any one of the optical sections 11, 12, 13, or 14 is detected by analysis device 21, or
- "0" or "NO" if no reflection by a Fiber Bragg Grating of the n^{th} type (each type of Fiber Bragg Grating being defined by a specific value of wavelength λₘ for which this Fiber Bragg Grating has a maximum reflection coefficient) at any one of the optical sections 11, 12, 13, or 14 is detected by analysis device 21.

For example:
- In figure 4a and 4b, four types of Fiber Bragg Grating having four different values of λₘ are used
- in figure 4a, the address 30 comprises four digits and is "1111" (or "YES" "YES" "YES" "YES"),
- in figure 4b, the address 30 comprises four digits and is also "1111" (or "YES" "YES" "YES" "YES"),
- this illustrates that FBGs can be understood as being spatially superimposed, and from this point of view the two addresses 30 in figures 4a and 4b are thus identical.

Nevertheless, some FBG interrogators 21, 25 are not only looking at the spectrum, but can also be arranged for looking at the time of flight and thus at the position along the addressing device 1. Such a system 20 would work exactly as a Brillouin one of the first example of address 30, thus providing 256 addresses on the 4 digits and not just 14.

It could be considered, should the laser in the Raman DTS be tunable, to use the Raman interrogator itself as a FBG interrogator. In this case, the FBGs could be arranged such as DTS measurement is performed at a wavelength different from the address to make sure that there are no induced losses. The system would work as a Brillouin approach of the first example, featuring 256 addresses for 4 digits.

The previously described second and third example of address 30 (for which the value of each optical address digit depends on a presence or absence of a specific type of Fiber Bragg Grating inside the addressing device and/or on a presence or absence of a Fiber Bragg Grating at a specific location inside the addressing device among several specific locations (11, 12, 13, 14) in the addressing device) can be generalized:
- fiber backscattered signal 2512 can be a Brillouin backscattered signal, a Raman Backscattered signal, or a Rayleigh Backscattered signal, for various possibilities a measured parameters (temperature, strain, vibrations, etc.) of fiber(s) 15; preferably fiber backscattered signal 2512 is a Raman Backscattered signal (for measuring at least one temperature of fiber(s) 15), or a Rayleigh Backscattered signal (for measuring at least one vibration of fiber(s) 15), and/or
- address signal 2522 can be a signal equal to or proportional to or depending on, by order of preference:
   ∘ one among:
      ▪ a wavelength or frequency or wavenumber of a back reflection signal; this case corresponds to the previously described second example of address 30,
      ▪ a wavelength or frequency or wavenumber of Rayleigh backscattered signal; this case corresponds to the previously described third example of address 30,
   ∘ a wavelength or frequency or wavenumber of Raman backscattered signal; but this could disturb a Raman measurement performed on fibers 151, 152, 153 if fiber backscattered signal 2512 is a Raman Backscattered signal,
   ∘ a wavelength or frequency or wavenumber of a Brillouin backscattered signal; this is not the preferred embodiment, as the first example of address 30 seems more simple for Brillouin backscattering,
   ∘ an intensity loss of a backscattered signal, such as a Brillouin or Raman or Rayleigh backscattered signal, but such an intensity loss is usually difficult to detect and usually drowned in measurement noise,
- fiber backscattered signal 2512 and the address signal 2522 can be different or the same signal; in the preferred embodiment, fiber backscattered signal 2512 and the address signal 2522 are not both a Raman backscattered signal.

Of course, the invention is not limited to the examples which have just been described and numerous amendments can be made to these examples without exceeding the scope of the invention.

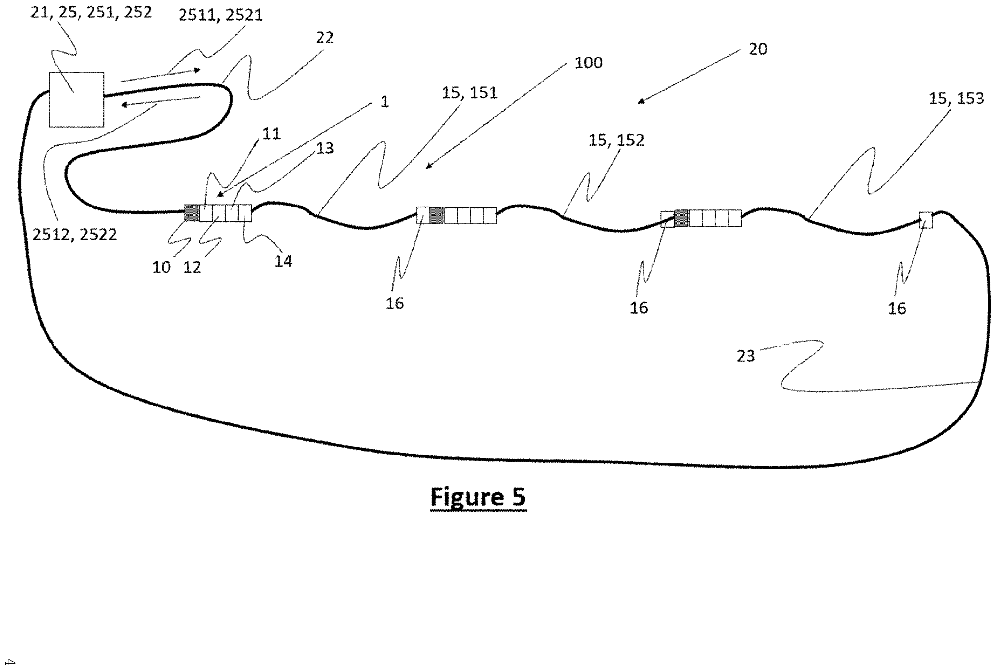

For example, compared to figure 1:
- fiber 23 can be deleted and is not necessary, in particular if no probe signal is needed, and/or
- fibers 24 can be removed as illustrated in figure 5, and/or
- each stop device 6 can be removed, for example if one considers that the addressing device 1 of a fiber 152 is the stop device of the previous fiber 151.

Of course, the different characteristics, forms, variants and embodiments of the invention can be combined with each other in various combinations to the extent that they are not incompatible or mutually exclusive.

## Claims

1. System (20) for addressing optical fibers, comprising:
- a plurality of addressable optical fibers (15) arranged for light to travel through them along an optical path,
- an addressing device (1) per addressable optical fiber:
∘ each addressing device (1) comprising several optical sections,
∘ each addressing device associated with an addressable optical fiber being arranged to give an optically coded address to the addressable optical fiber with which it is associated different from the address or addresses of the other addressable optical fiber or fibers,
∘ each associated addressing device and addressable optical fiber forming a part of the optical path distinct from the other parts of the optical path,
∘ each address comprising a plurality of optical address digits, each addressing device being arranged so that each of the optical address digits of the address given by this addressing device is created by an address signal coming from this addressing device, each address signal of each digit coming from a different optical section of the addressing device
- an analysis device (21) arranged to:
o receive at least one fiber backscattered signal from at least one of the addressable optical fibers (15), and
∘ for each addressable optical fiber (15) from which a fiber backscattered signal is received, identify and/or localize this addressable optical fiber by using the address signals of the optical address digits coding for the address of this addressable optical fiber.

2. The system according to claim 1, **characterized in that** each address signal is a signal equal to or proportional to or depending on:
- a wavelength or frequency or wavenumber of a backscattered signal, such as a Brillouin or Raman or Rayleigh backscattered signal, or
- a wavelength or frequency or wavenumber of a back reflection signal, or
- an intensity loss of a backscattered signal, such as a Brillouin or Raman or Rayleigh backscattered signal.

3. The system according to claim 1 or 2, **characterized in that** each address signal is a Brillouin backscattered signal and the value of each optical address digit depends on:
- a Brillouin frequency shift and/or
- a material and/or structure, and/or
- a physical parameter
of a section of optical fiber, among several sections (11, 12, 13, 14) of optical fibers in the addressing device, coding for this optical address digit.

4. The system according to any one of claims 1 to 3, **characterized in that** at least one addressing device (1) comprises different sections (11, 12, 13, 14) of optical fibers linked in series and having different Brillouin frequency shifts and/or different materials and/or structures and/or physical parameters.

5. The system according to any one of claims 1 to 4, **characterized in that** at least one addressing device (1) comprises different sections (11, 12, 13) of optical fibers linked in series wherein to each section is applied a different strain.

6. The system according to claim 1 or 2, **characterized in that** the value of each optical address digit depends on a presence or absence of a specific type of Fiber Bragg Grating inside the addressing device and/or on a presence or absence of a Fiber Bragg Grating at a specific location inside the addressing device among several specific locations (11, 12, 13, 14) in the addressing device.

7. The system according to any one of claims 1, 2 and 6, **characterized in that** at least one addressing device (1) comprises several Fiber Bragg Gratings linked in series.

8. The system according to any one of claims 1 to 7, **characterized in that** each optical address digit is a bit having only two possible values.

9. The system according to any one of claims 1 to 7, **characterized in that** each optical address digit has at least three possible values.

10. The system according to any one of the previous claims, **characterized in that** each addressable optical fiber is surrounded, along the optical path:
- by its associated addressing device (1) on one end of the addressable optical fiber, and
- by a stop device (16) on the other end of the addressable optical fiber, the stop device being arranged for coding for an end of the addressable optical fiber with a least one end digit created by an end signal coming from the stop device.

11. Method for addressing optical fibers, implemented in a system (20) according to any one of claims 1 to 10,
the method comprising:
- for each addressing device associated with an addressable optical fiber, generating an optically coded address to the addressable optical fiber with which it is associated different from the address or addresses of the other addressable optical fiber or fibers, each address comprising a plurality of optical address digits, each optical address digit being created by an address signal coming from the addressing device,
- receiving at least one fiber backscattered signal from at least one of the addressable optical fibers (15), and
- for at least one addressable optical fiber (15) from which a fiber backscattered signal is received, identifying and/or localizing this addressable optical fiber by using the address signals of the optical address digits coding for the address of this addressable optical fiber.

12. Method according to claim 11, **characterized in that** the fiber backscattered signal from at least one of the addressable optical fibers (15) and each address signal being generated from the same excitation signal or pump signal.

## Patentansprüche

1. System (20) zur Adressierung von optischen Fasern, umfassend:
- eine Vielzahl von adressierbaren optischen Fasern (15), die so angeordnet sind, dass Licht entlang eines Lichtwegs durch sie hindurchläuft,
- eine Adressiervorrichtung (1) pro adressierbare optische Faser:
∘ wobei jede Adressiervorrichtung (1) mehrere optische Abschnitte umfasst,
∘ wobei jede einer adressierbaren optischen Faser zugeordnete Adressiervorrichtung so angeordnet ist, dass sie der adressierbaren optischen Faser, der sie zugeordnet ist, eine optisch codierte Adresse zuweist, die sich von der Adresse oder den Adressen der anderen adressierbaren optischen Faser oder Fasern unterscheidet,
∘ wobei jede zugeordnete Adressiervorrichtung und jede adressierbare optische Faser einen Teil des optischen Weges bilden, der sich von den anderen Teilen des optischen Weges unterscheidet,
∘ jede Adresse umfasst eine Vielzahl von optischen Adresszeichen, wobei jede Adressiervorrichtung so ausgelegt ist, dass jedes der optischen Adresszeichen der von dieser Adressiervorrichtung zugewiesenenAdresse durch ein von dieser Adressiervorrichtung kommendes Adresssignal erzeugt wird, wobei jedes Adresssignal jedes Zeichens von einem anderen optischen Abschnitt der Adressiervorrichtung stammt;
- eine Analysevorrichtung (21), die so ausgelegt ist, dass sie:
∘ zum Empfang mindestens eines faserrückgestreuten Signals von mindestens einer der adressierbaren optischen Fasern (15), und;
∘ zum Identifizieren und/oder Lokalisieren jeder adressierbaren optischen Faser (15), von der ein faserrückgestreutes Signal empfangen wird, unter Verwendung der Adresssignale der optischen Adresszeichen, die die Adresse dieser adressierbaren optischen Faser codieren.

2. System nach Anspruch 1, **dadurch gekennzeichnet, dass** jedes Adresssignal ein Signal ist, das gleich oder proportional zu oder abhängig von Folgendem ist:
- einer Wellenlänge, Frequenz oder Wellenzahl eines rückgestreuten Signals, wie beispielsweise eines Brillouin-, Raman- oder Rayleigh-Rückstreusignals, oder
- eine Wellenlänge, Frequenz oder Wellenzahl eines Rückreflexionssignals oder;
- einen Intensitätsverlust eines rückgestreuten Signals, wie beispielsweise eines Brillouin-, Raman- oder Rayleigh-Rückstreusignals.

3. System nach Anspruch 1 oder 2, **dadurch gekennzeichnet, dass** jedes Adresssignal ein Brillouin-Rückstreusignal ist und der Wert jedes optischen Adresszeichens abhängt von:
- einer Brillouin-Frequenzverschiebung und/oder
- einem Material und/oder einer Struktur und/oder
- einem physikalischen Parameter eines Abschnitts einer optischen Faser unter mehreren Abschnitten (11, 12, 13, 14) von optischen Fasern in der Adressiervorrichtung, die dieses optische Adresszeichen codieren.

4. System nach einem der Ansprüche 1 bis 3, **dadurch gekennzeichnet, dass** mindestens eine Adressiervorrichtung (1) verschiedene Abschnitte (11, 12, 13, 14) von optischen Fasern umfasst, die in Reihe geschaltet sind und unterschiedliche Brillouin-Frequenzverschiebungen und/oder unterschiedliche Materialien und/oder Strukturen und/oder physikalische Parameter aufweisen.

5. System nach einem der Ansprüche 1 bis 4, **dadurch gekennzeichnet, dass** mindestens eine Adressiervorrichtung (1) verschiedene Abschnitte (11, 12, 13) von in Reihe geschalteten optischen Fasern umfasst, wobei auf jeden Abschnitt eine unterschiedliche Dehnung ausgeübt wird.

6. System nach Anspruch 1 oder 2, **dadurch gekennzeichnet, dass** der Wert jedes optischen Adresszeichens von dem Vorhandensein oder Fehlen eines bestimmten Typs eines Faser-Bragg-Gitters innerhalb der Adressiervorrichtung und/oder dem Vorhandensein oder Fehlen eines Faser-Bragg-Gitters an einer bestimmten Stelle innerhalb der Adressiervorrichtung unter mehreren bestimmten Stellen (11, 12, 13, 14) in der Adressiervorrichtung abhängt.

7. System nach einem der Ansprüche 1, 2 und 6, **dadurch gekennzeichnet, dass** mindestens eine Adressiervorrichtung (1) mehrere in Reihe geschaltete Faser-Bragg-Gitter umfasst.

8. System nach einem der Ansprüche 1 bis 7, **dadurch gekennzeichnet, dass** jedes optische Adresszeichen ein Bit ist, das nur zwei mögliche Werte annimmt.

9. System nach einem der Ansprüche 1 bis 7, **dadurch gekennzeichnet, dass** jedes optische Adresszeichen mindestens drei mögliche Werte annimmt.

10. System nach einem der vorstehenden Ansprüche, **dadurch gekennzeichnet, dass** jede adressierbare optische Faser entlang des Strahlengangs:
- von ihrer zugehörigen Adressiervorrichtung (1) an einem Ende der adressierbaren optischen Faser und
- durch eine Abschlussvorrichtung (16) am anderen Ende der adressierbaren optischen Faser, wobei die Abschlussvorrichtung so ausgelegt ist, dass sie das Ende der adressierbaren optischen Faser mit mindestens einem Endzeichen codiert, das durch ein von der Abschlussvorrichtung ausgegebenes Endsignal erzeugt wird.

11. Verfahren zur Adressierung von optischen Fasern, das in einem System (20) gemäß einem der Ansprüche 1 bis 10 implementiert ist,
- für jede einer adressierbaren optischen Faser zugeordnete Adressiervorrichtung das Erzeugen einer optisch codierten Adresse für die adressierbare optische Faser, der sie zugeordnet ist, die sich von der Adresse oder den Adressen der anderen adressierbaren optischen Faser oder Fasern unterscheidet, wobei jede Adresse eine Vielzahl von optischen Adresszeichen umfasst, wobei jedes optische Adresszeichen durch ein von der Adressiervorrichtung kommendes Adresssignal erzeugt wird,
- Empfangen mindestens eines faserrückgestreuten Signals von mindestens einer der adressierbaren optischen Fasern (15) und;
- für mindestens eine adressierbare optische Faser (15), von der ein faserrückgestreutes Signal empfangen wird, Identifizieren und/oder Lokalisieren dieser adressierbaren optischen Faser unter Verwendung der Adresssignale der optischen Adresszeichen, die die Adresse dieser adressierbaren optischen Faser codieren.

12. Verfahren nach Anspruch 11, **dadurch gekennzeichnet, dass** das von mindestens einer der adressierbaren optischen Fasern (15) stammende Faserrückstreusignal und jedes Adresssignals aus demselben Ansteuersignal oder Pumpsignal erzeugt wird.

## Revendications

1. Système (20) d'adressage de fibres optiques, comprenant :
- une pluralité de fibres optiques adressables (15) agencées de manière à ce que de la lumière les traverse le long d'un trajet optique,
- un dispositif d'adressage (1) par fibre optique adressable :
∘ chaque dispositif d'adressage (1) comprenant plusieurs sections optiques,
∘ chaque dispositif d'adressage associé à une fibre optique adressable étant agencé pour donner une adresse optiquement codée à la fibre optique adressable à laquelle il est associé, différente de l'adresse ou des adresses de l'autre fibre optique adressable ou des autres fibres optiques adressables,
∘ chaque dispositif d'adressage et fibre optique adressable associés formant une partie du trajet optique distincte des autres parties du trajet optique,
∘ chaque adresse comprenant une pluralité de caractères d'adresse optique, chaque dispositif d'adressage étant agencé de sorte que chacun des caractères d'adresse optique de l'adresse donnée par ce dispositif d'adressage est créé par un signal d'adresse provenant de ce dispositif d'adressage, chaque signal d'adresse de chaque caractère provenant d'une section optique différente du dispositif d'adressage
- un dispositif d'analyse (21) agencé pour :
∘ recevoir au moins un signal rétrodiffusé par fibre provenant d'au moins l'une des fibres optiques adressables (15), et
∘ pour chaque fibre optique adressable (15) à partir de laquelle un signal rétrodiffusé de fibre est reçu, identifier et/ou localiser cette fibre optique adressable en utilisant les signaux d'adresse des caractères d'adresse optique codant pour l'adresse de cette fibre optique adressable.

2. Système selon la revendication 1, **caractérisé en ce que** chaque signal d'adresse est un signal égal ou proportionnel à, ou dépendant de :
- une longueur d'onde ou une fréquence ou un nombre d'onde d'un signal rétrodiffusé, tel qu'un signal rétrodiffusé Brillouin, Raman ou Rayleigh, ou
- une longueur d'onde ou une fréquence ou un nombre d'onde d'un signal de rétroréflexion, ou
- une perte d'intensité d'un signal rétrodiffusé, tel qu'un signal rétrodiffusé Brillouin, Raman ou Rayleigh.

3. Système selon la revendication 1 ou 2, **caractérisé en ce que** chaque signal d'adresse est un signal rétrodiffusé Brillouin et la valeur de chaque caractère d'adresse optique dépend de :
- un décalage de fréquence Brillouin et/ou
- un matériau et/ou une structure, et/ou
- un paramètre physique
d'une section de fibre optique, parmi plusieurs sections (11, 12, 13, 14) de fibres optiques dans le dispositif d'adressage, codant pour ce caractère d'adresse optique.

4. Système selon l'une quelconque des revendications 1 à 3, **caractérisé en ce qu'**au moins un dispositif d'adressage (1) comprend différentes sections (11, 12, 13, 14) de fibres optiques reliées en série et ayant différents décalages de fréquence Brillouin et/ou différents matériaux et/ou structures et/ou paramètres physiques.

5. Système selon l'une quelconque des revendications 1 à 4, **caractérisé en ce qu'**au moins un dispositif d'adressage (1) comprend différentes sections (11, 12, 13) de fibres optiques reliées en série, dans lequel à chaque section est appliquée une contrainte différente.

6. Système selon la revendication 1 ou 2, **caractérisé en ce que** la valeur de chaque caractère d'adresse optique dépend d'une présence ou d'une absence d'un type spécifique de réseau de Bragg à fibres à l'intérieur du dispositif d'adressage et/ou d'une présence ou d'une absence d'un réseau de Bragg à fibres à un emplacement spécifique à l'intérieur du dispositif d'adressage parmi plusieurs emplacements spécifiques (11, 12, 13, 14) dans le dispositif d'adressage.

7. Système selon l'une quelconque des revendications 1, 2 et 6, **caractérisé en ce qu'**au moins un dispositif d'adressage (1) comprend plusieurs réseaux de Bragg à fibres reliés en série.

8. Système selon l'une quelconque des revendications 1 à 7, **caractérisé en ce que** chaque caractère d'adresse optique est un bit n'ayant que deux valeurs possibles.

9. Système selon l'une quelconque des revendications 1 à 7, **caractérisé en ce que** chaque caractère d'adresse optique a au moins trois valeurs possibles.

10. Système selon l'une quelconque des revendications précédentes, **caractérisé en ce que** chaque fibre optique adressable est entourée, le long du trajet optique :
- par son dispositif d'adressage associé (1) sur une extrémité de la fibre optique adressable, et
- par un dispositif d'arrêt (16) sur l'autre extrémité de la fibre optique adressable, le dispositif d'arrêt étant agencé pour coder une extrémité de la fibre optique adressable avec au moins un caractère d'extrémité créé par un signal de fin provenant du dispositif d'arrêt.

11. Procédé d'adressage de fibres optiques, mis en œuvre dans un système (20) selon l'une quelconque des revendications 1 à 10, le procédé comprenant :
- pour chaque dispositif d'adressage associé à une fibre optique adressable, la génération d'une adresse codée optiquement vers la fibre optique adressable à laquelle il est associé, différente de l'adresse ou des adresses de l'autre fibre optique adressable ou des autres fibres optiques adressables, chaque adresse comprenant une pluralité de caractères d'adresse optique, chaque caractère d'adresse optique étant créé par un signal d'adresse provenant du dispositif d'adressage,
- la réception d'au moins un signal rétrodiffusé par fibre provenant d'au moins l'une des fibres optiques adressables (15), et
- pour au moins une fibre optique adressable (15) à partir de laquelle un signal rétrodiffusé de fibre est reçu, l'identification et/ou la localisation de cette fibre optique adressable en utilisant les signaux d'adresse des caractères d'adresse optique codant pour l'adresse de cette fibre optique adressable.

12. Procédé selon la revendication 11, **caractérisé en ce que** le signal rétrodiffusé par fibre provient d'au moins l'une des fibres optiques adressables (15) et chaque signal d'adresse étant généré à partir du même signal d'excitation ou signal de pompe.
